# FASCICULE DE BREVET EUROPEEN

(11) **EP 1 384 366 B1**
(45) Date de publication et mention de la délivrance du brevet: **25.04.2007**
(21) Numéro de dépôt: 02720050.0
(22) Date de dépôt: 11.03.2002
(51) Int. Cl.: H04L 29/06

(54) **SYSTEME ET PROCEDE DE COMMUNICATION ENTRE STATIONS TRAITANT DES DOSSIERS COMMUNS**
VORRICHTUNG UND VERFAHREN ZUR KOMMUNIKATION ZWISCHEN GERÄTEN MIT GEMEINSAMEN DATENSÄTZEN
SYSTEM AND METHOD FOR COMMUNICATION BETWEEN STATIONS PROCESSING COMMON FILES

(30) Priorité: 27.04.2001 FR 0105718
(43) Date de publication de la demande: 28.01.2004
(73) Titulaire: Ipracom SA, 91370 Verrières le Buisson (FR)
(72) Inventeur: GRUSON, Alain, F-91370 Verrières le Buisson (FR)
(74) Mandataire: Bentz, Jean-Paul
(86) Numéro de dépôt international: PCT/FR2002/000863
(87) Numéro de publication internationale: WO 2002/089447

(56) Documents cités:
- WO-A-01/22246
- GB-A- 2 319 863

## Description

L'invention, de manière générale, concerne des systèmes électroniques de communication qui permettent à des stations éloignées les unes des autres de communiquer entre elles et, plus particulièrement, un système électronique de communication qui connecte entre elles des stations susceptibles de traiter des dossiers communs.

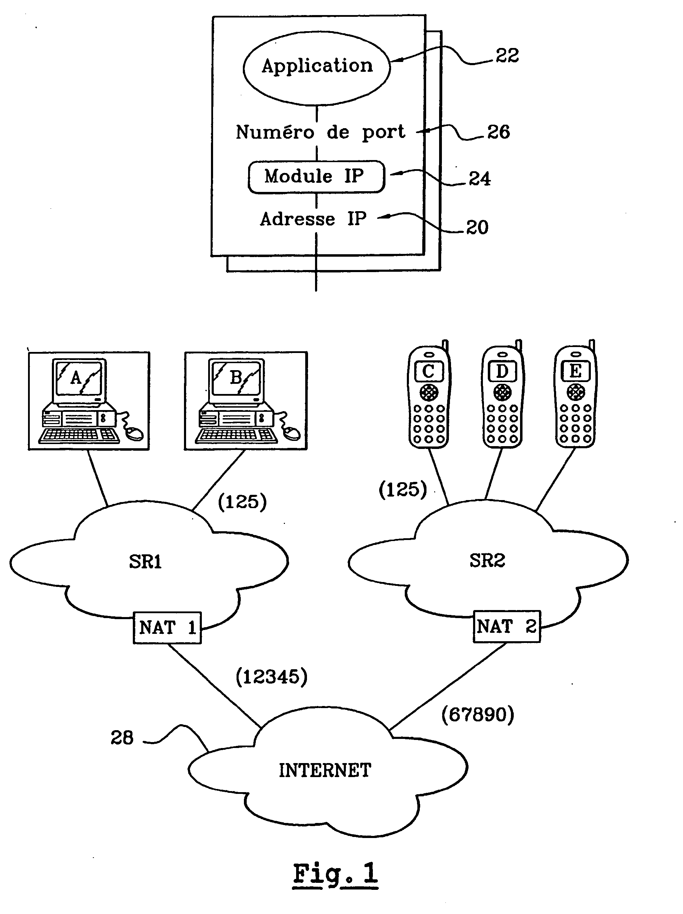

Un système électronique de communication entre des stations, tel qu'il en existe actuellement, est montré sur la figure 1. Il comprend, par exemple, cinq stations A, B, C, D et E constituées pour A et B par des ordinateurs de bureau et pour C, D et E par des téléphones portables dits intelligents ou des ordinateurs de poche. Les ordinateurs A et B communiquent entre eux par l'intermédiaire d'un réseau local ou sous-réseau SR1 tandis que les téléphones portables communiquent entre eux par un sous-réseau SR2. Les ordinateurs A et B utilisent à cet effet un protocole de communication appelé protocole IP, IP étant l'acronyme pour l'expression anglo-saxonne "Internet Protocol", ce protocole exploitant le fait que tout ordinateur connecté au réseau local possède une adresse caractéristique de l'ordinateur, appelée adresse IP 20. Ainsi, en mettant en oeuvre le protocole IP, une application 22 fonctionnant sur l'ordinateur A peut demander aux programmes de communication contenus dans un module IP 24 d'établir une liaison avec une autre application fonctionnant sur l'autre ordinateur B.

Pour ce faire, elle fournit l'adresse IP 20 de l'ordinateur B qu'elle souhaite atteindre ainsi qu'un numéro d'application 26 appelé "Numéro de port". Si l'ordinateur B a activé l'application capable de recevoir le trafic correspondant au numéro de port visé, celle-ci est informée par son propre module IP de la demande de connexion. Si l'application accepte la liaison, l'application de l'ordinateur B peut alors dialoguer avec l'application fonctionnant sur l'ordinateur A.

Les téléphones portables et ordinateurs de poche C, D et E, comprenant un microprocesseur et une mémoire de volume suffisant pour faire fonctionner des applications telles que des agendas et annuaires, sont connectés par radio au sous-réseau SR2 exploité par un opérateur. Ils contiennent, comme les ordinateurs A et B, des modules IP qui permettent d'établir des liaisons entre les applications.

Les divers sous-réseaux SR1 et SR2 sont connectés au réseau INTERNET 28 par des dispositifs disponibles dans le commerce appelés NAT, NAT étant l'acronyme pour l'expression anglo-saxonne "Network Address Translator" référencés NAT1 pour le sous-réseauSR1 et NAT 2 pour le sous-réseau SR2. Grâce à ces dispositifs, des paquets d'informations, transportés selon le protocole IP, peuvent être échangés entre deux stations, même si celles-ci ne sont pas connectées au même sous-réseau car les paquets peuvent transiter par le réseau INTERNET 28.

Cependant, il se peut que deux stations A et C, appartenant à deux sous-réseaux différents, répondent à la même adresse IP (125), chacune dans leur sous-réseau respectif. Pour résoudre cette ambiguïté, chaque dispositif NAT se voit affecter, par des administrateurs du réseau INTERNET, un lot d'adresses IP qui permet à chaque dispositif NAT d'être identifié de manière non ambiguë par le réseau INTERNET.

Dans le cas d'une liaison entre deux stations, le dispositif NAT associe, temporairement, l'adresse IP de la station dans le sous-réseau à une adresse IP choisie dans son lot d'adresses INTERNET rendant ainsi la station du sous-réseau visible depuis le réseau INTERNET. Cette association s'appelle une translation d'adresse.

Ainsi, la station A appartenant au sous-réseau SR1 et qui correspond à l'adresse IP (125) peut dialoguer avec une station C appartenant au sous-réseau SR2 même si elle possède la même adresse IP (125) car le dispositif NAT1 du sous-réseau SR1 transformera l'adresse (125) de A en une adresse unique (1-2-3-4-5) tandis que le dispositif NAT2 du sous-réseau SR2 transformera l'adresse (125) de C en une autre adresse unique (67890). La station A dialoguera alors avec la station C sous l'adresse (6-7-8-9-0) tandis que la station C dialoguera alors avec la station A sous l'adresse (1-2-3-4-5).

La description de la figure 1 montre qu'il est possible de faire communiquer entre elles les stations A, B, C, D et E bien qu'elles soient connectées à des sous-réseaux différents mais ces communications ne sont établies que temporairement. Il en résulte qu'un tel fonctionnement n'est pas propice à l'établissement de communications semi-permanentes entre les stations A, B, C, D et E dans le cas où ces dernières partagent des dossiers communs dont la mise à jour nécessite de nombreux échanges.

D'autres exemples de processus de coopération limitée entre différentes stations reliées par Internet sont données dans les documents de brevets WO 01/22246 et GB 2 319 863.

Dans ce contexte, un but de la présente invention est de réaliser un système qui permette à différentes stations de communiquer facilement entre elles, notamment, en vue d'effectuer des mises à jour des dossiers communs.

Le système de l'invention concerne en outre des moyens pour mettre à jour les dossiers qui sont communs à différentes stations au fur et à mesure de leur création ou modification par les utilisateurs de stations.

En effet, selon l'art antérieur, il est possible d'établir des liaisons entre les stations A, B, C, D et

E mais ces liaisons supposent la connaissance mutuelle des adresses des stations, ce qui n'est pas toujours le cas. En outre, les communications entre les utilisateurs se bornent alors généralement à :
- l'utilisation de dialogues du type question/réponse avec des serveurs,
- l'utilisation de logiciels de messagerie qui assurent le transfert asynchrone de messages d'une station à l'autre par l'intermédiaire d'un réseau de serveurs.

Il y a donc des échanges d'informations mais il n'existe pas, pour une certaine application, un groupe de stations qui partagent des dossiers communs constamment mis à jour dans chaque station du groupe.

L'invention répond à cette demande en :
- prévoyant dans chaque station d'un groupe de travail une base de données d'objets pour chaque application,
- prévoyant des liaisons directes quasi-permanentes entre les stations d'un même groupe de travail pour réaliser les mises à jour des bases de données. A cet effet, l'invention concerne un système électronique de communication entre des stations comprenant des moyens permettant de se connecter entre elles par l'intermédiaire d'au moins un réseau de type INTERNET, ce système étant caractérisé en ce que :

- lesdites stations font partie d'au moins un même groupe de travail pour au moins une application, chaque station comprenant pour chaque application une même base de données d'objets, les bases de données d'objets étant mises à jour automatiquement via le réseau, et ce système comprenant en outre :

- un serveur central connecté au réseau pour gérer lesdites stations d'au moins un même groupe de travail et déterminer les certificats d'authentification de chaque station, et
- au moins un serveur de référencement connecté au réseau pour établir des liaisons directes entre les stations d'un même groupe de travail.

Chaque station comprend :
- des moyens de mémoire pour enregistrer la base de données d'objets correspondant à ladite application ainsi que des moyens logiciels nécessaires à la mise en oeuvre de l'application, et
- un microprocesseur et ses mémoires associées pour effectuer les opérations définies par lesdits moyens logiciels.

Les moyens logiciels comprennent :
- un premier groupe de moyens logiciels pour établir une liaison authentifiée entre deux stations ayant la même application, et
- un deuxième groupe de moyens logiciels pour créer et modifier la base de données.

Le premier groupe de moyens logiciels comprend :
- un premier moyen logiciel pour se connecter au serveur central au moment de l'installation de l'application en vue de déterminer un certificat d'authentification de la station concernée,
- un deuxième moyen logiciel pour se connecter périodiquement au serveur de référencement en vue d'y enregistrer les éléments de localisation de la station,
- un troisième moyen logiciel pour établir une liaison entre ladite station et une autre station du même groupe de travail, et
- un quatrième moyen logiciel pour authentifier mutuellement les stations appelante et appelée à l'aide du certificat d'authentification élaboré par le premier moyen logiciel.

Le deuxième groupe de moyens logiciels comprend :
- un cinquième moyen logiciel pour créer ou modifier au moins un objet dans la base de données d'objets, et
- un sixième moyen logiciel pour transmettre d'une station à toutes les autres stations du même groupe de travail toute modification effectuée dans la base de données d'objets de ladite station de manière à modifier les bases de données d'objets des autres stations.

Le troisième moyen logiciel pour établir une liaison entre ladite station et une autre station du même groupe de travail effectue des tentatives de liaison consistant à :
(T1) rechercher une liaison avec la dernière adresse connue de la station appelée, et, en cas d'échec,
(T2) rechercher la station appelée dans le sous-réseau auquel est connectée la station appelante, et, en cas d'échec,
(T3) interroger le serveur de référencement pour connaître les éléments de localisation de la station appelée et, en cas d'échec,
(T4) attendre que la station appelée établisse une liaison avec la station appelante.

D'autres caractéristiques et avantages de la présente invention apparaîtront à la lecture de la description suivante d'un exemple particulier de réalisation, ladite description étant faite en relation avec les dessins joints dans lesquels :
- la figure 1, déjà décrite dans le préambule des présentes, est un schéma d'un système électronique de communication entre stations selon l'art antérieur,
- la figure 2 est un schéma illustrant la mise à jour des bases de données des stations d'un groupe traitant des dossiers communs selon l'invention,
- la figure 3 est un schéma d'un système électronique de communication entre stations selon des caractéristiques de la présente invention,
- la figure 4 est un schéma d'un système électronique de communication utilisant plusieurs serveurs de référencement selon l'invention,
- la figure 5 est un schéma illustrant l'établissement des liaisons dans le système électronique de communication entre stations selon l'invention,
- la figure 6 est un schéma illustrant la détermination d'un certificat d'une station,
- la figure 7 est un schéma illustrant l'authentification de la station B par la station A.

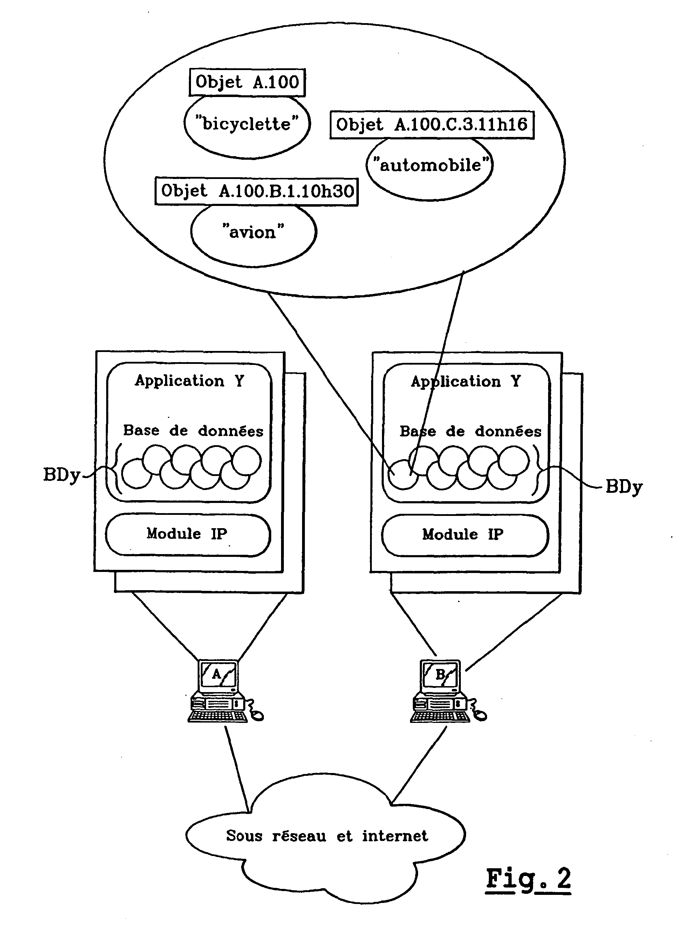

La figure 2 est un schéma montrant l'organisation de deux stations A et B qui font partie d'un même groupe de travail pour une application donnée Y.

Toutes les stations appartenant à un même groupe de travail ont, sur leur disque dur ou dans leurs mémoires, la copie d'une même base de données d'objets, BDy pour l'application Y, qui est caractéristique du groupe de travail.

Chaque objet de la base de données BDy possède une référence unique composée du nom de la station qui l'a créé initialement associé à un nombre; des moyens logiciels garantissent que deux objets différents ne peuvent se voir affecter la même référence.

Ces objets contiennent des données caractéristiques du dialogue entre collègues d'un même groupe de travail travaillant ensemble sur des dossiers communs : il peut s'agir de messages libres, d'enregistrements formatés suivant un modèle prédéfini ou de références de documents ou de fichiers bureautiques.

Les informations contenues dans les objets peuvent, selon leur type, être visualisés sur l'écran de la station et/ou modifiées par l'intermédiaire du clavier de la station ou de tout autre dispositif.

La base de données BDy contient également la liste des stations appartenant aux autres membres du groupe de travail et, à chaque nom de station A, B, C, D ou E, sera associée la dernière adresse IP avec laquelle une liaison a pu être établie avec la station.

Dès qu'un objet est modifié, l'application en cours sur la station où la modification a eu lieu établit automatiquement des liaisons IP avec toutes les autres stations appartenant au même groupe de travail.

Lorsqu'une liaison est établie avec une station appartenant au même groupe de travail, l'application en cours sur la station A où la modification a eu lieu envoie à l'application en cours sur l'autre station B un message formaté de façon convenue et contenant les informations permettant à l'autre application de l'autre station B de mettre à jour tout ou partie des informations contenues dans l'objet de sa propre base de données et correspondant à la référence de l'objet modifié.

Si un tel objet n'existe pas dans la station B, il est alors créé.

Ce processus est mis en oeuvre entre la station A et toutes les autres stations d'un même groupe de travail de telle sorte que toutes les bases de données BDy des stations du même groupe de travail contiendront les mêmes objets, chacun identifié par la même référence et contenant les mêmes informations.

Comme les modifications d'un même objet peuvent provenir de différentes stations à des moments différents, il y a lieu de définir certaines règles.

En effet, si la station B modifie un objet A.100 créé par la station A en remplaçant le mot "bicyclette" qu'il contient par le mot "avion" et si la station C modifie le même objet A. 100 en remplaçant "bicyclette" par "automobile", il sera impossible de déterminer si l'objet A.100 doit contenir "avion" ou "automobile".

Pour régler ce problème, l'application en cours sur une station est programmée de telle sorte qu'elle n'a l'autorisation de modifier le contenu de l'objet que si elle en est la créatrice, c'est-à-dire que si la référence de l'objet concerné contient son nom.

Si la station souhaitant modifier l'objet n'en est pas la créatrice, elle crée un objet dérivé de même forme que l'objet initial mais ayant pour référence celle de l'objet initial suivi du nom de la station modificatrice, d'un numéro unique et de l'heure de la création telle que lue à l'heure locale de la station modificatrice. Cette station modificatrice place ainsi dans l'objet créé l'information qu'elle souhaiterait voir modifier dans l'objet initial.

Les objets dérivés sont répertoriés par les références :
- objet A.100-B-1-lOh30 pour la modification "avion" par la station B (la première modification B-1), et
- objet A.100-C-3-11h16 pour la modification "automobile" par la station C (la troisième modification C-3).

Les objets dérivés sont ensuite transmis à toutes les autres stations du même groupe de travail selon le processus décrit ci-dessus.

Lorsque la station créatrice A de l'objet recevra une copie du ou des objets dérivés créés par les autres stations B et C du même groupe de travail, son application Y pourra décider d'intégrer ou non, en totalité ou en partie, le contenu des objets dérivés dans l'objet initial. Cette décision peut être prise selon des algorithmes adéquats dépendant de l'usage fonctionnel qui est fait de l'objet.

Si cette décision s'avère impossible, un message d'avertissement sera affiché à l'écran de la station créatrice A à charge pour l'utilisateur de régler le conflit.

Si les algorithmes de décision ont besoin de connaître l'ordre dans lequel ont été créés les objets dérivés, afin par exemple de ne conserver que l'objet dérivé le plus récent, il est procédé à un échange des heures locales des stations lors de l'établissement de chaque liaison. Ainsi, lorsque la station A se connecte à une station B, elle lui transmet l'heure telle que lue sur son horloge locale de sorte que la station B connaît le décalage horaire de la station A par rapport à la sienne et peut alors traduire dans son heure locale tout horodatage fait par la station A.

Dès que l'intégration des objets dérivés est faite, des liaisons sont établies avec les autres stations du même groupe de travail pour transmettre l'objet initial tel que modifié à toutes les autres stations ainsi que des messages d'annulation des objets dérivés, y compris dans la station créatrice.

Par les moyens décrits ci-dessus en relation avec la figure 2, les informations contenues dans les objets peuvent être modifiées pour tout membre du même groupe de travail sans verrouillage préalable des informations comme cela se pratique dans les systèmes de bases de données réparties.

La description qui vient d'être faite en relation avec la figure 2 montre qu'il est nécessaire d'organiser des liaisons directes entre les stations d'un même groupe de travail pour effectuer ces mises à jour des objets des bases de données des stations.

Comme indiqué dans le préambule ci-dessus, la translation d'adresse effectuée par les dispositifs NAT1 et NAT2 dans leur fonction de connexion d'un sous-réseau SR1 ou SR2 au réseau INTERNET 28 rend difficile l'établissement d'une connexion semi-permanente entre une station A appartenant au sous-réseauSR1 et une station C appartenant au sous-réseau SR2.

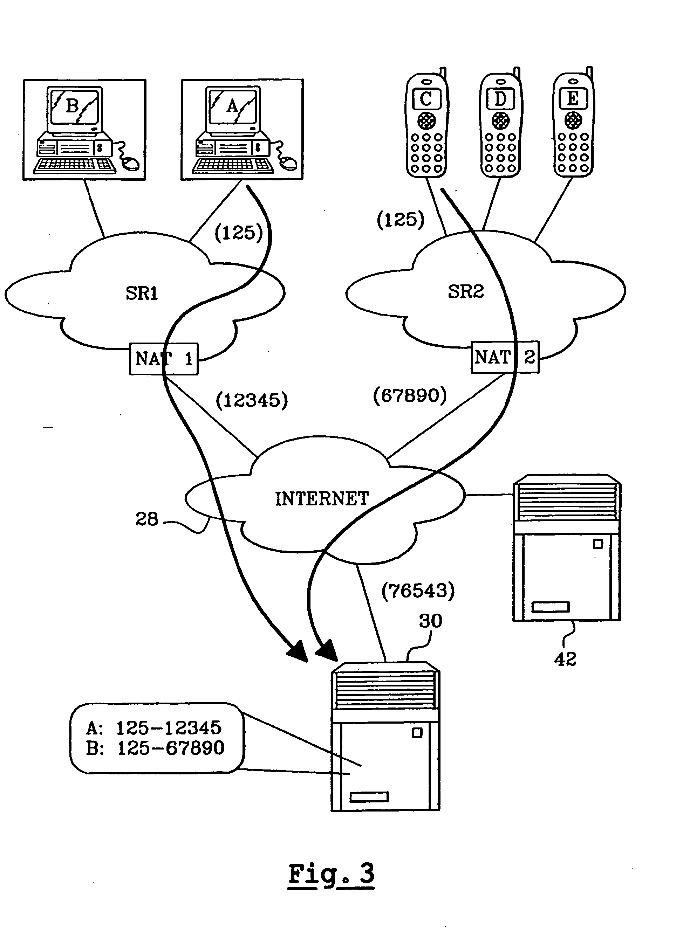

Pour résoudre ce problème, l'invention utilise un serveur dit de référencement référencé 30 (figure 3), dans le schéma de la figure 3, ce schéma étant identique à celui de la figure 1, correspondant à l'art antérieur sauf pour l'ajout de ce serveur 30 et d'un serveur central 42 destiné à la détermination d'un certificat d'authentification des stations.

Le serveur de référencement 30 est connecté au réseau INTERNET 28 selon une adresse IP fixe et parfaitement connue de toutes les stations, cette adresse dépendant du nom de la station avec laquelle une station veut établir une liaison.

Pour établir une liaison IP, la station A émet périodiquement un message vers le serveur de référencement 30 en utilisant l'adresse IP de ce serveur connue de tous, par exemple (76543). Ce message contient le nom de la station A ainsi que l'adresse IP (125) qu'elle possède dans le sous-réseau SR1. Le serveur de référencement recevant ce message y trouve ces informations (nom de la station A et adresse IP(125)), ainsi que l'adresse IP de la station A telle que traduite par le dispositif NAT1 du sous-réseau SR1, soit (1-2-3-4-5). Pour chaque station A, B, C, D et E, ces informations sont enregistrées dans une mémoire du serveur de référencement. Ainsi, pour la station C, cette mémoire contiendra l'adresse IP (125) de la station C dans le sous-réseau SR2 et l'adresse IP (6-78-9-0) telle que traduite par le dispositif NAT2 du sous-réseau SR2.

Par ce moyen, la station A pourra connaître l'adresse IP de la station C en établissant préalablement une liaison avec le serveur de référencement pour demander, selon un moyen logiciel approprié, la dernière adresse IP connue pour la station C, soit (6-7-8-9-0).

Dans certains cas, les dispositifs NAT du commerce effectuent des contrôles destinés à interdire les flux de données non autorisés : ces dispositifs portent alors le nom de "murs pare-feu". Pour traverser les murs pare-feu dans le sens sous-réseau vers le réseau INTERNET, l'invention propose d'utiliser le numéro de port "80" qui a la particularité d'être utilisé par les serveurs du réseau INTERNET et de n'être généralement pas filtré. Pour traverser les murs pare-feu dans le sens INTERNET vers le sous-réseau, la station enverra périodiquement des messages vers le port 80 du serveur de référencement ou vers tout autre serveur de référencement comme décrit ci-après dont il connaît l'adresse IP. Le mur pare-feu déclenchera un mécanisme interne par lequel il autorise le serveur de référencement interrogé à répondre à la station émettrice pendant un temps fixé par l'administration du dispositif NAT. Ainsi, si le délai entre deux messages périodiques envoyés par la station vers le réseau INTERNET est inférieur au temps fixé par l'administrateur du NAT, alors la translation d'adresse faite par le dispositif NAT restera la même dans le temps et le dispositif NAT laissera passer le trafic provenant du réseau INTERNET vers la station émettrice.

Si un grand nombre de stations communiquent entre elles, le trafic des messages envoyés vers le serveur de référencement risque de saturer le serveur de référencement.

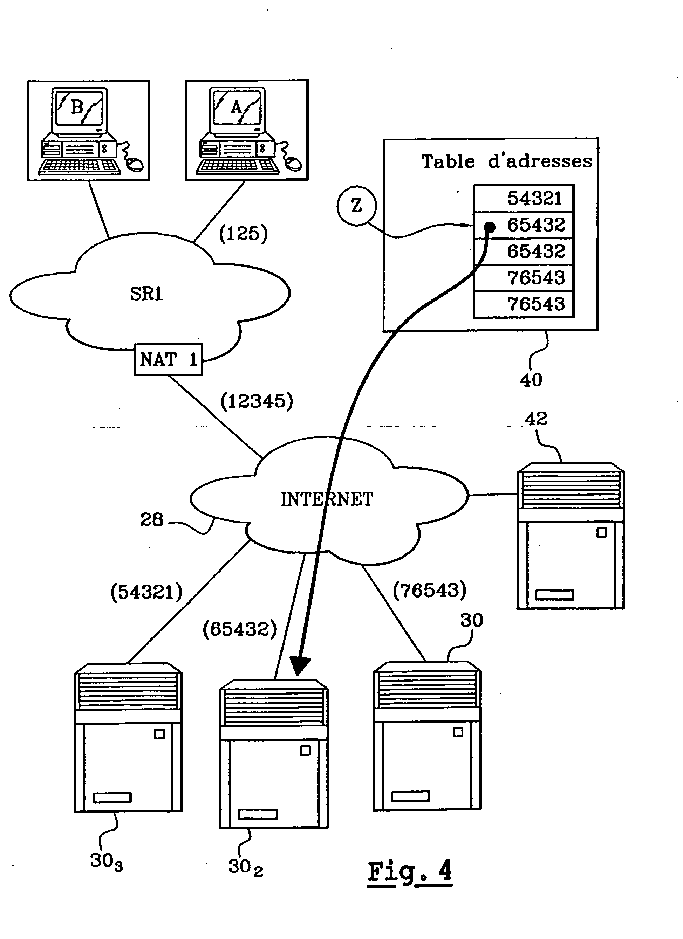

Pour résoudre ce problème de saturation, l'invention propose de mettre en service plusieurs serveurs de référencement 30,30₂,30₃ (figure 4) de manière à prendre en charge chacun une partie du trafic.

A cet effet, chaque station contient dans ses mémoires une table d'adresses 40 comportant n postes, les postes contenant normalement les adresses IP des p serveurs de référencement en service. Si p < n, alors plusieurs postes contiennent la même adresse comme le montre la figure 4.

Lorsqu'une station souhaite s'adresser au serveur de référencement en charge de mémoriser les données pour une station Z, le processus suivant est appliqué :
- calcul sur le nom de la station Z pour fournir un résultat r compris entre 1 et n,
- lecture dans le rème poste de la table d'adresses 40 de l'adresse IP du serveur de référencement gérant la station Z, par exemple le serveur de référencement 30₂,
- la station émettrice expédie alors un message vers ce serveur de référencement 30₂ ce message contenant par construction le nom de Z; si ce serveur de référencement 30₂ sait effectivement gérer la station Z, alors l'application continue.

Dans le cas contraire, cela signifie que la table d'adresses 40 de la station émettrice n'est pas à jour et le serveur de référencement 30₂ télécharge par un protocole approprié une table à jour vers la station émettrice puis le processus décrit ci-dessus est alors recommencé avec cette table mise à jour. Pour éviter de monopoliser une adresse IP d'un dispositif NAT au service d'une station, l'invention propose de réaliser des tentatives d'établissement d'une liaison entre deux stations selon un ordre déterminé en partant de celle qui consommera le moins de ressources et en terminant par celle qui en consommera le plus.

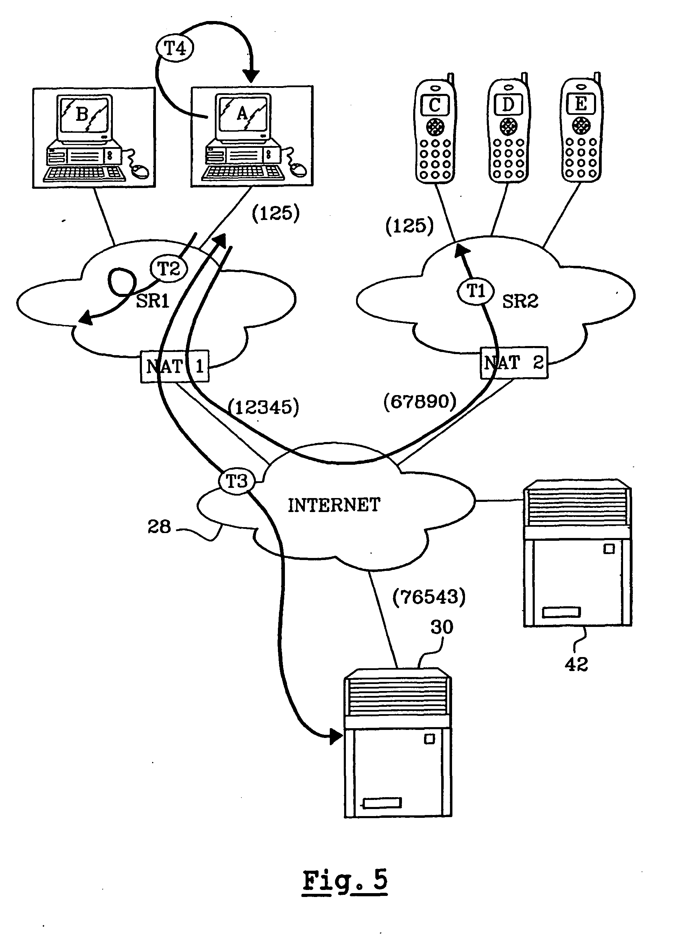

La première tentative T1 (figure 5) consiste à demander au module IP de la station A d'établir une liaison avec la dernière adresse connue de la station B telle qu'enregistrée dans la table d'adresses 40 (figure 4) de la station A.

Si cette première tentative n'aboutit pas, on passe à la deuxième tentative T2 qui consiste à demander au module IP de la station A d'activer la fonction recherche d'un correspondant dans le sous-réseau dans lequel se trouve la station A.

Si cette deuxième tentative n'aboutit pas, on passe à la troisième tentative T3 qui consiste à demander au serveur de référencement 30 ou 30₂ ou 30₃, qui a enregistré la dernière adresse connue pour la station B, d'envoyer cette adresse à la station A, adresse avec laquelle cette dernière tente d'établir une liaison.

Si cette tentative n'aboutit pas, on passe à la quatrième tentative T4 qui consiste pour la station A à attendre que la station B établisse de sa propre initiative une liaison avec la station A. Après l'établissement de la liaison, la station A transmettra les informations en attente vers la station B.

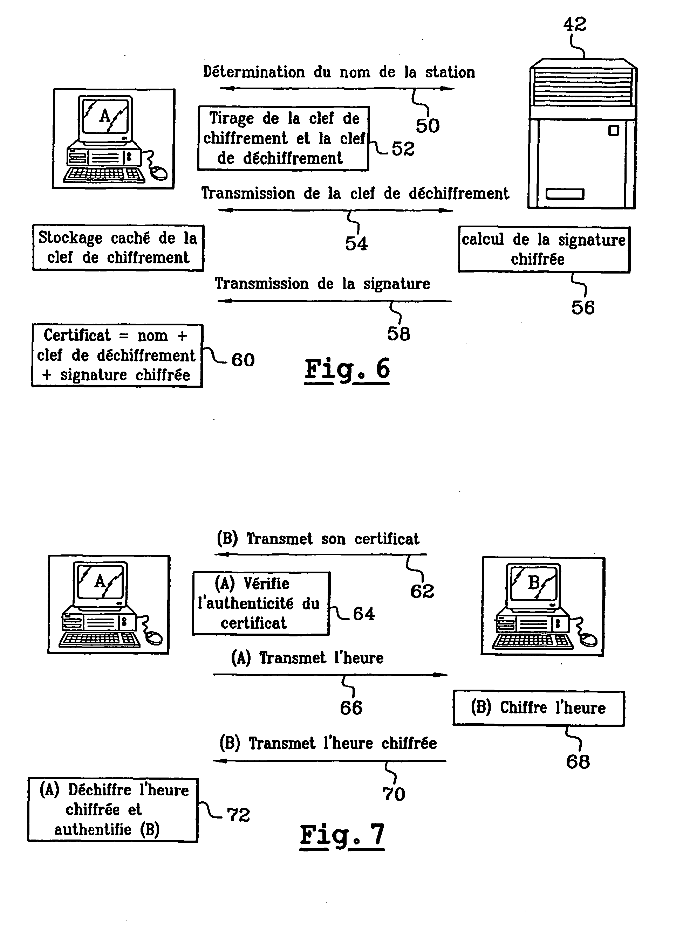

Il est remarqué que dans le déroulement de ces différentes tentatives T1 à T4, l'établissement d'une liaison avec une station n'est pas un critère suffisant de succès pour la tentative car si une station répond, la station A cherche à authentifier l'application qui a répondu pour vérifier qu'elle est autorisée à fonctionner sur la station B selon le procédé d'authentification qui sera décrit ci-après en relation avec les figures 6 et 7.

Ce procédé d'authentification se réalise en deux phases :
- la première phase permet de déterminer un certificat pour chaque station (figure 6),
- la deuxième phase permet d'authentifier une station par une autre à l'aide du certificat obtenu lors de la première phase (figure 7).

La première phase est réalisée lors de l'installation de l'application selon l'invention sur une station.

Elle consiste à établir une liaison automatique avec le serveur central 42. Ce dernier demandera à l'utilisateur de la station, par exemple par un affichage sur l'écran de la station, d'introduire le nom souhaité pour la station. Le serveur central vérifie par examen de ses mémoires que ce nom n'est pas déjà utilisé par une autre station. Une fois le nom accepté (50), la station déterminera, par exemple à partir de la date et de l'heure lues sur son horloge centrale, des clés de chiffrement et de déchiffrement (52) pour servir à chiffrer et déchiffrer des informations par un algorithme. Cet algorithme utilise une clé secrète de chiffrement qui est stockée à l'insu de tous dans une des mémoires de la station et une clé publique de déchiffrement qui est transmise (54) au serveur central. Le serveur central établit (56) par un algorithme ayant comme données d'entrée le nom de la station et la clé publique de déchiffrement, une signature caractéristique des données en entrée. Cette signature est chiffrée (56) par le même algorithme en utilisant une clé secrète connue de l'exploitant du serveur central. Cette signature chiffrée est transmise à la station (58).

Pour la phase d'authentification, l'ensemble (60) constitué par le nom de la station, la clé publique de déchiffrement de la station et la signature chiffrée constituera le certificat de la station.

La deuxième phase est mise en oeuvre lors de l'établissement d'une liaison entre une station A et une station B.

La station B envoie (60) son certificat à la demande de la station A. La station A calcule la signature de la station B en appliquant au nom de la station B et à sa clé publique de déchiffrement l'algorithme du serveur central.

Ensuite, la station A, en utilisant la clé publique de déchiffrement correspondant à la clé secrète connue de l'exploitant du serveur, vérifie (64) que la signature calculée correspond bien à la signature déchiffrée.

De cette manière, la station A vérifie que le certificat transmis par la station B est bien un certificat délivré par le serveur central 42.

La station A transmet (66) à la station B l'heure locale. La station B chiffre (68) cette heure locale en utilisant sa clé secrète et transmet (70) l'heure chiffrée à la station A.

La station A déchiffre (72) l'heure chiffrée à l'aide de la clé publique de la station B. Si le résultat de ce déchiffrement correspond à l'heure transmise par la station A à la station B, la station A en déduira que la station avec laquelle elle est en liaison est bien la station B.

Le même processus est appliqué pour authentifier la station A par la station B.

## Revendications

1. Système électronique de communication entre des stations (A, B, C, D, E) comprenant des moyens permettant de se connecter entre elles par l'intermédiaire d'au moins un réseau de type INTERNET(SR1, SR2,28), **caractérisé en ce que** :
- les stations (A, B, C, D, E) font partie d'au moins un même groupe de travail pour au moins une application Y, chaque station comprenant pour chaque application une même base de données d'objets (BDy), et les bases de données d'objets (BDy) étant mises à jour automatiquement via le réseau (SR1, SR2,28), et **en ce que** le réseau comprend :
- un serveur central (42), connecté au réseau(SR1, SR2, 28) pour gérer les stations (A, B, C, D, E) d'au moins un même groupe de travail et déterminer les certificats d'authentification de chaque station, et
- au moins un serveur de référencement (30, 30₂, 30₃) connecté au réseau (SR1, SR2,28) pour établir des liaisons directes entre les stations (A, B, D, C, E) d'un même groupe de travail.

2. Système selon la revendication 1, **caractérisé en ce que** chaque station (A, B, C, D, E) comprend :
- des moyens de mémoire pour enregistrer la base de données d'objets (BDy) correspondant à ladite application ainsi que des moyens logiciels nécessaires à la mise en oeuvre de l'application, et
- un microprocesseur et ses mémoires associées pour effectuer les opérations définies par lesdits moyens logiciels.

3. Système selon la revendication 2, **caractérisé en ce que** lesdits moyens logiciels comprennent au moins :
- un premier groupe de moyens logiciels pour établir une liaison authentifiée, et
- un deuxième groupe de moyens logiciels pour créer et modifier la base de données BDy.

4. Système selon la revendication 3, **caractérisé en ce que** le premier groupe de moyens logiciels comprend :
. un premier moyen logiciel pour se connecter au serveur central (42) au moment de l'installation de l'application dans une station en vue de déterminer un certificat d'authentification de la station concernée,
. un deuxième moyen logiciel pour connecter périodiquement la station au serveur de référencement en vue d'y enregistrer les éléments de localisation de ladite station,
. un troisième moyen logiciel pour établir une liaison entre ladite station et une autre station du même groupe de travail, et
. un quatrième moyen logiciel pour authentifier mutuellement les stations appelante et appelée à l'aide du certificat d'authentification élaboré par le premier moyen logiciel.

5. Système selon la revendication 4, **caractérisé en ce que** le troisième moyen logiciel effectue des tentatives de liaison consistant à :
(T1) rechercher une liaison avec la dernière adresse connue de la station appelée, et, en cas d'échec,
(T2) rechercher la station appelée dans le sous-réseau auquel est connectée la station appelante, et, en cas d'échec,
(T3) interroger le serveur de référencement (30) pour connaître les éléments de localisation de la station appelée et, en cas d'échec, et
(T4) attendre que la station appelée établisse une liaison avec la station appelante.

6. Système selon l'une quelconque des revendications 3 à 5, **caractérisé en ce que** le deuxième groupe de moyens logiciels comprend :
- un cinquième moyen logiciel pour créer et modifier au moins un objet dans la base de données d'objets (BDy), et
- un sixième moyen logiciel pour transmettre d'une station à toutes les autres stations du même groupe de travail toute création ou modification effectuée dans la base de données d'objets (BDy) de ladite station de manière à modifier les bases de données d'objets des autres stations.

7. Système selon la revendication 6, **caractérisé en ce que** le cinquième moyen logiciel consiste à permettre à chaque station :
- de créer au moins un objet initial et d'identifier (A.100) cet objet initial,
- de modifier cet objet initial (A.100),
- de créer un objet dérivé (A.100, B.1) modifiant un objet initial (A.100) créé par une autre station,
- d'accepter ou non la modification de l'objet initial par l'objet dérivé (A.100, B.1,10h30) dans le cas où la station est créatrice de l'objet initial (A.100).

8. Système selon l'une des revendications précédentes, **caractérisé en ce que** le serveur de référencement (30, 30₂, 30₃) comprend au moins une mémoire dans laquelle sont enregistrés les éléments de localisation des stations (A, B, C, D, E) du même groupe de travail dans le réseau.

9. Système selon la revendication 8, **caractérisé en ce que** ladite mémoire enregistrant lesdits éléments de localisation des stations est mise à jour périodiquement par les stations du même groupe de travail.

## Claims

1. Electronic system of communication between stations (A, B, C, D, E) comprising means for connecting between them via at least one network of internet type (SR1, SR2, 28), **characterized in that**:
- the stations (A, B, C, D, E) are part of at least one particular workgroup for at least one application Y, each station comprising, for each application, one and the same object database (BDy), and the object databases (BDy) being updated automatically via the network (SR1, SR2, 28), and **in that** the network comprises:
- a central server (42), connected to the network (SR1, SR2, 28) to manage the stations (A, B, C, D, E) of at least one particular workgroup and determine the authentication certificates of each station, and
- at least one referencing server (30, 30₂, 30₃), connected to the network (SR1, SR2, 28) for setting up direct links between the stations (A, B, C, D, E) of a particular workgroup.

2. System according to Claim 1, **characterized in that** each station (A, B, C, D, E) comprises:
- memory means for storing the object database (BDy) corresponding to said application and software means necessary for implementing the application, and
- a microprocessor and its associated memories for performing the operations defined by said software means.

3. System according to Claim 2, **characterized in that** said software means comprise at least:
- one first group of software means for setting up an authenticated link, and
- a second group of software means for creating and modifying the database BDy.

4. System according to Claim 3, **characterized in that** the first group of software means comprises:
- a first software means for connecting to the central server (42) at the time of installation of the application in a station in order to determine an authentication certificate of the station concerned,
- a second software means for periodically connecting the station to the referencing server in order to register thereon the locating elements of said station,
- a third software means for setting up a link between said station and another station of the same workgroup, and
- a fourth software means for mutually authenticating the calling and called stations using the authentication certificate generated by the first software means.

5. System according to Claim 4, **characterized in that** the third software means makes link attempts consisting in:
(T1) searching for a link with the last known address of the called station, and, in case of failure,
(T2) searching for the called station in the subnetwork to which the calling station is connected, and, in the case of failure,
(T3) interrogating the referencing server (30) to ascertain the locating elements of the called station and, in the case of failure,
(T4) waiting for the called station to set up a link with the calling station.

6. System according to any one of Claims 3 to 5, **characterized in that** the second group of software means comprises:
- a fifth software means for creating and modifying at least one object in the object database (BDy), and
- a sixth software means for transmitting from a station to all the other stations of the same workgroup any creation or modification done in the object database (BDy) of said station so as to modify the object databases of the other stations.

7. System according to Claim 6, **characterized in that** the fifth software means consists in enabling each station:
- to create at least one initial object and identify (A.100) this initial object,
- to modify this initial object (A.100),
- to create a derived object (A.100, B.1) modifying an initial object (A.100) created by another station,
- to accept or not accept the modification of the initial object by the derived object (A.100, B.1, 10h30) in the case where the station is the creator of the initial object (A.100).

8. System according to one of the preceding claims, **characterized in that** the referencing server (30, 30₂, 30₃) comprises at least one memory in which are stored the locating elements of the stations (A, B, C, D, E) of the same workgroup in the network.

9. System according to Claim 8, **characterized in that** said memory storing said locating elements of the stations is updated periodically by the stations of the same workgroup.

## Patentansprüche

1. Elektronisches Kommunikationssystem zwischen Stationen (A, B, C, D, E) mit Mitteln, die sich untereinander mithilfe wenigstens eines Netzes in der Art des Internet (SR1, SR2, 28) verbinden lassen können, **dadurch gekennzeichnet, dass**:
- die Stationen (A, B, C, D, E) Teil wenigstens ein und derselben Arbeitsgruppe für wenigstens eine Anwendung Y sind, wobei jede Station für jede Anwendung ein und dieselbe Objekt-Datenbank (BDy) umfasst und die Objekt-Datenbanken (BDy) über das Netz (SR1, SR2, 28) automatisch aktualisiert werden, und **dadurch**, dass das Netz umfasst:
- einen zentralen Server (42), der an das Netz (SR1, SR2, 28) angeschlossen ist, um die Stationen (A, B, C, D, E) wenigstens ein und derselben Arbeitsgruppe zu steuern und die Authentifikationszertifikate jeder Station festzulegen, und
- wenigstens einen Referenzserver (30, 30₂, 30₃), der an das Netz (SR1, SR2, 28) angeschlossen ist, um direkte Verbindungen zwischen den Stationen (A, B, C, D, E) ein und derselben Arbeitsgruppe einzurichten.

2. System nach Anspruch 1, **dadurch gekennzeichnet, dass** jede Station (A, B, C, D, E) umfasst:
- Speichermittel, um die der Anwendung entsprechende Objekt-Datenbank (BDy) zu speichern, sowie für die Durchführung der Anwendung notwendige Software, und
- einen Mikroprozessor und seine zugeordneten Speicher, um die durch die Software definierten Operationen durchzuführen.

3. System nach Anspruch 2, **dadurch gekennzeichnet, dass** die Software wenigstens umfasst:
- eine erste Gruppe von Software, um eine authentifizierte Verbindung einzurichten, und
- eine zweite Gruppe von Software, um die Datenbank BDy zu erzeugen und zu modifizieren.

4. System nach Anspruch 3, **dadurch gekennzeichnet, dass** die erste Gruppe von Software umfasst:
· eine erste Software, um sich mit dem zentralen Server (42) im Augenblick der Installation der Anwendung in einer Station verbinden zu lassen, um ein Authentifikationszertifikat der betreffenden Station festzulegen,
· eine zweite Software, um die Station periodisch mit dem Referenzserver zu verbinden, um in diesem die Lokalisierungselemente der Station zu speichern,
· eine dritte Software, um eine Verbindung zwischen der Station und einer weiteren Station ein und derselben Arbeitsgruppe einzurichten, und
. eine vierte Software, um wechselseitig die anrufende und die angerufene Station mithilfe des durch die erste Software erarbeiteten Authentifikationszertifikats zu authentifizieren.

5. System nach Anspruch 4, **dadurch gekennzeichnet, dass** die dritte Software Verbindungsanläufe ausführt, bestehend aus:
(T1) Suchen einer Verbindung mit der letzten bekannten Adresse der angerufenen Station und gegebenenfalls Abbruch,
(T2) Suchen der angerufenen Station in dem Unternetz, an welches die anrufende Station angeschlossen ist, und gegebenenfalls Abbruch,
(T3) Abfragen des Reverenzservers (30), um die Lokalisierungselemente der angerufenen Station kennen zu lernen, und gegebenenfalls Abbruch, und
(T4) Erreichen, dass die angerufene Station eine Verbindung mit der anrufenden Station einrichtet.

6. System nach einem der Ansprüche 3 bis 5, **dadurch gekennzeichnet, dass** die zweite Gruppe von Software umfasst:
- eine fünfte Software, um wenigstens ein Objekt in der Objekt-Datenbank (BDy) zu erzeugen und zu modifizieren,
- eine sechste Software, um von einer Station an alle weiteren Stationen ein und derselben Arbeitsgruppe jede in der Objekt-Datenbank (BDy) dieser Station ausgeführte Erzeugung oder Modifikation zu übertragen, um so die Objekt-Datenbanken der weiteren Stationen zu modifizieren.

7. System nach Anspruch 6, **dadurch gekennzeichnet, dass** die fünfte Software darin besteht, jeder Station zu ermöglichen:
- wenigstens ein Anfangsobjekt zu erzeugen und dieses Anfangsobjekt zu identifizieren (A.100),
- dieses Anfangsobjekt (A.100) zu modifizieren,
- ein abgeleitetes Objekt (A.100, B.1) zu erzeugen, das ein durch eine weitere Station erzeugtes Anfangsobjekt (A.100) modifiziert,
- die Modifikation des Anfangsobjekts durch das abgeleitete Objekt (A.100, B.1, 10h30) in dem Fall zu akzeptieren oder nicht, in welchem die Station die Erzeugerin des Anfangsobjekts (A.100) ist.

8. System nach einem der vorstehenden Ansprüche, **dadurch gekennzeichnet, dass** der Referenzserver (30, 30₂, 30₃) wenigstens einen Speicher umfasst, in welchem die Lokalisierungselemente der Stationen (A, B, C, D, E) ein und derselben Arbeitsgruppe in dem Netz gespeichert sind.

9. System nach Anspruch 8, **dadurch gekennzeichnet, dass** der die Lokalisierungselemente der Stationen speichernde Speicher durch die Stationen ein und derselben Arbeitsgruppe periodisch aktualisiert wird.
